(19)

Europäisches
Patentamt
European
Patent Office
Office européen
des brevets

(11) **EP 2 109 263 A1**

(12) **EUROPEAN PATENT APPLICATION**

(43) Date of publication:
**14.10.2009 Bulletin 2009/42**

(51) Int Cl.:
***H04L 12/56*** *(2006.01)*

(21) Application number: **08154222.7**

(22) Date of filing: **08.04.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Nokia Siemens Networks Oy
02610 Espoo (FI)**

(72) Inventors:
 • **Kastner, Karl
 81477, Munchen (DE)**

 • **Martos-Riano, Demian
 10115, Berlin (DE)**
 • **Pekonen, Johanna
 02110, Espoo (FI)**

(74) Representative: **Style, Kelda Camilla Karen
Page White & Farrer
Bedford House
John Street
London, WC1N 2BF (GB)**

(54) **Signalling in a communications network**

(57)     A method of controlling communication in a communications network. A central node (10) sends a first message to a plurality of nodes (16). In response thereto, a gathering node (18) receives at least one second message, the or each message being received from a respective one of the plurality of nodes (16), the or each second message comprising information indicative of a state of the respective node. The response gathering node (18) forms a response message comprising data associated with said information, and sends the response message to the central node (10). The first message may be a multimedia broadcast/multicast service procedure request. Apparatus for carrying out such a method.

**EP 2 109 263 A1**

**Description**

The present invention relates to a method of and a node for controlling communication in a communications network.

In 3GPP a Multimedia Broadcast/Multicast Service (MBMS) for a Universal Mobile Telecommunications System (UMTS) has been defined. The MBMS is currently being specified for a Long Term Evolution (LTE) network, or evolved UMTS terrestrial radio access network (E-UTRAN). The MBMS uses broadcast or multicast message distribution instead of several point-to-point links for communicating to several end user equipments (UEs).

A UE that operates in a UMTS or LTE network can obtain communication services using procedures according to a standard defined by the 3GPP. The standard specifies, for both of these networks, radio system parameters, data transfer procedures, network protocols, control messages and bearer traffic exchange to take place over the air interface. The MBMS allows efficient session management by enabling service data packets to be transferred in an efficient way to multiple UEs within these networks. For this purpose, a message can be transmitted from a core network node to several node Bs (NBs). Each NB can then send a unidirectional point-to-multipoint (PtM) transmission to UEs so that a UE in an idle or active mode receives network service data.

In E-UTRAN, MBMS messaging relies on an infrastructure such as IP multicast between a single evolved packet core (EPC) node in a core network and a potentially high number of evolved Node Bs (eNBs) to allow the EPC node to address the eNBs. The signalling on the control plane may be connection-oriented between an MBMS gateway (MB-GW) and an eNB. Thus, in order to simultaneously address all of the eNBs for MBMS session management a large number of connections are required. Scalability in order for a large number of eNBs to be simultaneously addressed is a problem for the MB-GW since a greater number of connections between the MB-GW and the eNBs causes greater load at the MB-GW. This problem arises in particular in E-UTRAN because of a reduced hierarchy of network elements between eNBs and an EPC node, in comparison to, for example, UTRAN where there is a hierarchy of network elements such as radio network controllers between node Bs and core network elements.

Scalability is also a problem in a transport network since such messages simultaneously lead to a peak in demand for bandwidth. The transport network must therefore be over-dimensioned in order to cope with the peak, that is, provisioned with a large bandwidth capacity which is costly and of a size that is generally unnecessary except for handling this peak in demand.

These problems exist not only in the E-UTRAN, but in communication networks in general. In particular, control signalling for IP multicast in not well developed, and of feedback and reliability mechanisms for such signalling. It is believed that efficient gathering of responses will be especially important in an evolved MBMS architecture.

According to a first aspect of the present invention, there is provided a method of controlling communication in a communications network, comprising: receiving at least one second message, the or each second message being received from a respective one of a plurality of nodes, the or each at least one second message comprising information indicative of a state of the respective node, in response to a first message from a central node; forming a third message comprising data associated with said information; and sending said third message to the central node.

The method may further comprise, after the step of receiving, determining that at least one second message has not been received and indicating to the central node that at least one second message has not been received.

The method may further comprise receiving at least one further second message from the plurality of nodes.

The method may further comprise, before the step of forming, determining that no further second messages are to be received.

In an embodiment, the method may further comprise determining a unique identifier of the or each of the plurality of nodes from which no second message has been received. The method may further comprise: receiving a first message, the first message being a multimedia broadcast/multicast message; and forwarding the multimedia broadcast/multicast message to the or each of the plurality of nodes from which no second message has been received. The indicating may include sending the unique identifier of the or each of the plurality of nodes from which no second message has been received to the central node.

The information may include at least one of: an indication that the respective node has sufficient resources to receive a service; an indication that the respective node has insufficient resources to receive a service; an indication that a service is not to be provided to the respective node; an estimate of time delay for message transmission between the central node and the respective node; and an indication of available resources at at the respective node. The data may include at least one of: an indicator that at least one of said plurality of nodes has sufficient resources to receive a service; an indicator that at least one of said plurality of nodes has insufficient resources to receive a service; an indicator that a service is not to be provided to at least one node; an indicator that no message was received from at least one node; information derived from estimates of time delay for message transmission between the central node and at least one node; and an indication of available resources at at least one of said plurality of nodes.

The method may further comprise sending from the central node to the plurality of nodes the first message, wherein the first message is a multimedia broadcast/multicast message.

**2**

The method may further comprise in response to receiving at the central node an indication that at least one second message has not been received, retransmitting the first message to the plurality of nodes.

According to a second aspect of the present invention, there is provided apparatus for controlling communication in a communications network, arranged to receive at least one second message, the or each second message being received from a respective one of a plurality of nodes, the or each at least one second message comprising information indicative of a state of the respective node, in response to a first message from a central node form a third message including data associated with said information; and send said third message to a central node.

The apparatus may be arranged to carry out a method according to the first aspect of the invention.

An access node may comprise the apparatus. The access node may be an evolved node B.

According to a third aspect of the present invention, there is provided apparatus for controlling communication in a communications network, comprising: a plurality of nodes; a central node for sending to the plurality of nodes a multimedia broadcast/multicast message and receiving a response message from a response handling node; and a response handling node for receiving a message from at least one of the plurality of nodes, each message comprising information indicative of a state of the respective node, forming a response message including data associated with said information, and sending said response message to a central node.

The apparatus may be arranged to carry out a method according to the first aspect of the invention.

According to a fourth aspect of the present invention, there is provided a method of controlling communication in a communications network, comprising, at a node: receiving a multimedia broadcast/multicast message from a central node; and sending a response to said message to a response handling node, said response including information indicative of a state of the node.

The message may include at least one of: an indication that the respective node has sufficient resources to receive a service; an indication that the respective node has insufficient resources to receive a service; an indication that a service is not to be provided to the respective node; an estimate of time delay for message transmission between the central node and the respective node; and an indication of available resources at at the respective node. The message may include a unique identifier of the node.

According to a fifth aspect of the present invention, there is provided apparatus arranged to: receive a multimedia broadcast/multicast message from a central node; and send a response to said message to a response gathering node, said response including information indicative of a state of the apparatus. An access node may comprise such apparatus. The access node may be an evolved node B.

According to a sixth aspect of the present invention, there is provided method of controlling communication in a communications network, comprising: sending a multimedia broadcast/multicast service message to a plurality of nodes; and receiving a response message, said response message including data indicative of a state of at least some of said plurality of nodes. The method may further comprise receiving an indication that at least a number of said plurality of nodes have not responded to the multimedia broadcast/multicast service message; and retransmitting the multimedia broadcast/multicast service message to the plurality of nodes.

According to a seventh aspect of the present invention, there is provided apparatus for controlling communication in a communications network, arranged to: send a multimedia broadcast/multicast service message to a plurality of nodes; and receive a response message, said response message including data indicative of a state of at least some of said plurality of nodes. A media centre may comprise such apparatus. A media centre may include a multimedia broadcast/multicast service gateway.

According to an eighth aspect of the present invention, there is provided a method of controlling communication in a communications network, the communications network comprising at least two sets of nodes, each set comprising at least two nodes, the method comprising: receiving information indicative of available resources at least two nodes over a first bearer; and determining whether to enable a second bearer for communication with at least one of the sets based on said information. Wherein it is determined to enable a second bearer to be established with the nodes in the at least one set, the method may further comprise transmitting a multimedia broadcast/multicast service message comprising information about a second bearer to the nodes in the at least two sets.

The method may further comprise: sending with said multimedia broadcast/multicast service message information indicative of the identity of the at least one set for which it is determined to enable a second bearer to be established; and determining at each of the nodes in the at least two sets whether that node is in the at least one set for which it is determined to enable a second bearer to be established based on said information indicative of the identity of the at least one set.

Wherein said first bearer is a first control plane bearer and said second bearer is a second control plane bearer, the method may further comprise transmitting to the nodes in the at least one set information about a user plane bearer over the second control plane bearer.

The method may further comprise: providing a service to at least some of the nodes in the at least one set over the user plane bearer.

The information indicative of available resources may be received at least in part from at least one responses gathering node, the or each responses gathering node being associated with a respective one of said at least two sets, said information indicative of available resources at at least two nodes in said one set being received in a single message.

According to a ninth aspect of the present invention, there is provided apparatus for controlling communication in a communications network, the communications network comprising at least two sets of nodes, each set comprising at least two nodes, the network element being arranged to: receive information indicative of available resources at least two nodes over a first bearer; and determine whether to enable a second bearer for communication with at least one of the sets based on said information. The apparatus may be arranged to carry out a method according to the eighth aspect of the invention.

According to a tenth aspect of the invention, there is provided a method, at a node, comprising: receiving a message comprising information about a second bearer over a first bearer; determining whether the node is authorised to establish the second bearer; and if the node is authorised, establishing the second bearer.

Wherein the first bearer is a first user plane bearer and the second bearer is a second user plane bearer, the method may further comprise receiving over the second control plane bearer information about a user plane bearer.

Wherein the node has available for user plane signalling another user plane bearer, the method further comprising selecting one of the user plane bearer and other user plane bearer for user plane signalling based on at least one of: at least one parameter of the user plane bearer; at least one parameter of the other user plane bearer; minimum requirements of a service to be received; and resources at the node. The method may further comprise establishing the user plane bearer. The method may further comprise transmitting an indication of resources to a responses gathering node.

According to an eleventh aspect of the present invention, there is provided apparatus arranged to: receive a message comprising information about a second bearer over a first bearer; and determine whether the node is authorised to establish the second bearer; and if the node is authorised, establishing the second bearer.

The apparatus may be further arranged to carry out a method according to the tenth aspect of the invention. An evolved node may comprise such apparatus.

According to a twelfth aspect of the present invention, there is provided method comprising: establishing a first bearer; receiving a message comprising information relating to a second bearer; and determining whether to establish the second bearer based on parameters of the first bearer and said information relating to the second bearer.

The method may be at a node and said determining may be further based on a consideration of resources at the node. The determining may be further based on requirements of a service. The first bearer may be a first user plane bearer, and said second bearer may be a second user plane bearer.

According to a thirteenth aspect of the invention, there is provided apparatus arranged to: communicate over a first bearer; receive a message comprising information relating to a second bearer; and determine whether to establish the second bearer based on parameters of the first bearer and said information relating to the second bearer.

The apparatus may be further arranged to carry out a method according to the twelfth aspect of the invention and embodiments thereof.

The invention is advantageous in that the peak in demand for bandwidth whilst MBMS session management control plane signalling takes place is reduced, and also in that load at a central node such as an MB-GW is reduced. Load will also be reduced at intermediate network elements such as at an SGSN located between base station entities such as the NBs and the central node.

Embodiments of the invention will now be described, by way of example only, with reference to the accompanying drawings, in which:

Figure 1 is a flow diagram showing signalling in a successful Session Start procedure over an Iu interface in a UTRAN;

Figure 2 shows a schematic view of elements of the UTRAN;

Figure 3 shows a schematic view of elements of a E-UTRAN , and additionally a response gathering node;

Figure 4 is a flow diagram showing signalling in a successful Session Start procedure over an Iu interface in the E-UTRAN;

Figure 5 is a flow diagram showing signalling according to embodiments of the invention between some elements in the E-UTRAN shown in Figure 3;

Figure 6 is a flow diagram showing operations within the response gathering node according to embodiments of the invention;

Figure 7 is a flow diagram showing operations within a central node according to embodiments of the invention; and

Figure 8 is a flow diagram showing a method involved in setting up different bearers according to embodiments of the invention.

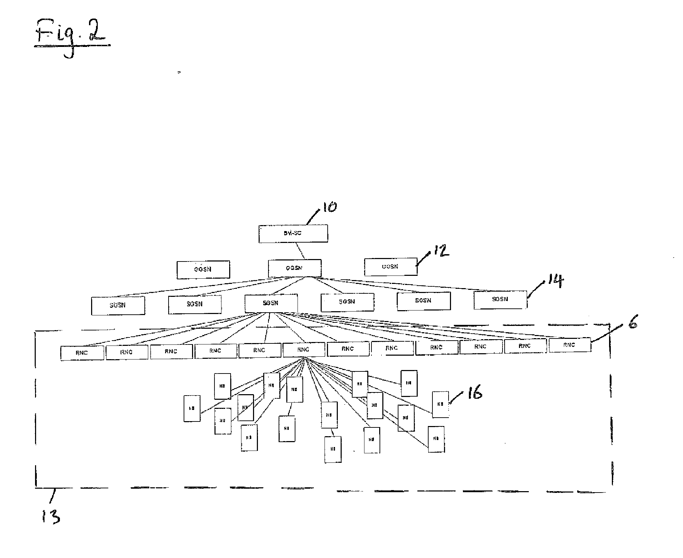

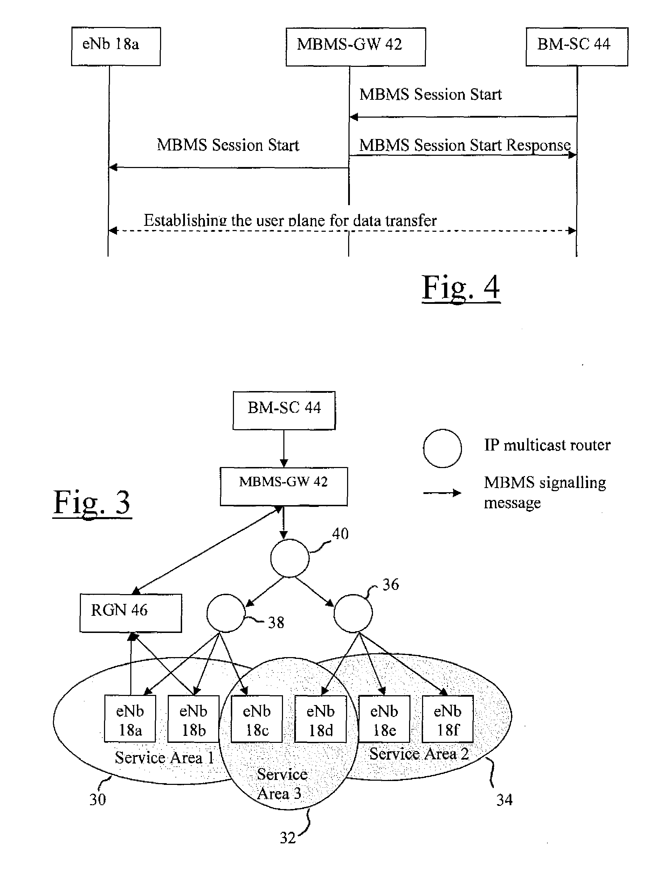

Like elements appearing in the drawings are generally designated with the same reference signs. Connections between elements in Figure 2 and 3 are shown with lines.

Aspects of signalling in a UTRAN network are now described. A network control protocol is used for establishment of an MBMS bearer from a central node in a core network to an node B (NB). Principles of use of a suitable network control protocol for session management in the UTRAN are specified in 3GPP TS 25.413 "UTRAN Iu interface RANAP signaling", sections 8.36 to 8.38, which are herein incorporated by reference. These sections describe:

- MBMS Session Start
- MBMS Session Update
- MBMS Session Stop.

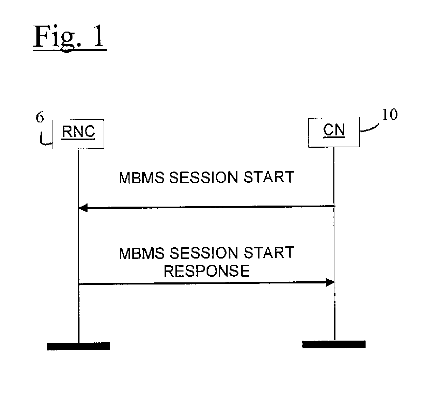

Referring to Figure 1, a core network (CN) sends an MBMS procedure request in the form of an MBMS Session Start message to a radio network controller (RNC) 6 via a central node 10 in the form of an MBMS gateway (MB-GW).

The RNC sends in response an MBMS session start response to the CN.

Analogous steps occur to effect an MBMS Session Update or an MBMS Session Stop. These are elementary procedures of class 1 and conventionally rely on connection-oriented signalling.

Principles of use of a suitable network control protocol for session management in an E-UTRAN are similar to those in the UTRAN.

A known method for hierarchical distribution of MBMS procedure requests in a UTRAN is now described with reference to Figure 2. Figure 2 shows a radio access network (RAN) 13 handling subscriber access and including a number of radio network controllers (RNCs) 6 and NBs 16. The RAN 13 allows communication to be made with user equipment (not shown) local to one or more NBs 16 in the RAN 13 via those one or more Node Bs (NBs). The RAN is associated with one of the serving GPRS support nodes (SGSNs) 14. The other SGSNs 14 have associated RANs (not shown). Each SGSN 14 is associated with one of several gateway GPRS support nodes (GGSNs) 12. The GGSNs 12 provide an interface between the radio network and an internet protocol (IP) network (for example, they perform protocol conversion between the GPRS and IP environments). The other GGSNs 12 also have associated SGSNs (not shown). The GGSNs 12 are associated with a broadcast/multicast service centre (BM-SC) 10.

In use, the BM-SC 10 sends a single MBMS message to the GGSNs 12 via the MB-GW (not shown in Figure 2). Each GGSN 12 passes the message to several Serving GPRS Support Nodes (SGSN) 14. Each SGSN 14 in turn passes the message to several RNCs 6. Each RNC 6 then passes the message to several NBs 16. This hierarchical distribution method is only one possible way of transmitting MBMS procedure requests to NBs and the invention is not limited to such.

A method of hierarchical distribution of MBMS procedure requests in the E-UTRAN is now described with reference to Figure 3. Figure 3 shows eNBs allowing communication with user equipment (not shown). A first eNB 18a and a second eNB 18b allow communication with the user equipment in a first service area 30, a third eNB 18c and a fourth eNB 18d allow communication with the user equipment in a second service area 32, and a fifth eNB 18e and a sixth eNBs allow communication with the user equipment in a third service area 34. Although only two eNBs are shown in each service area 30, 32, 34, there can be a considerably greater number of eNBs in each service area 30, 32, 34. There can also be a greater or lesser number of service areas. The eNBs 18 are associated with an IP multicast distribution tree in the form of a hierarchy of multicast routers 36, 38, 40. An upper multicast router 40 in said hierarchy of multicast routers 36, 38, 40 is associated with an MBMS gateway (MBMS-GW) 42, which is in turn associated with a Broadcast/Multicast service centre (BM-SC) 44.

Figure 3 also shows a responses gathering node (RGN) 46 in accordance with an embodiment of the invention. The RGN 46 is associated with the MBMS-GW 42 to allow the MBMS-GW 42 to receive messages from the RGN 46. The RGN 46 is able to communicate with the first and second eNBs 18a, 18b in the first service area 30 to allow the RGN 46 to receive control plane messages from those eNBs 18a, 18b.

While in this embodiment one RGN 46 is shown, it will be appreciated that there may be any number of RGNs 46 in the network each serving a number of eNBs. In this embodiment, the third and fourth eNBs 18c, 18d are associated with a second RGN (not shown) and the fifth and sixth eNBs 18e, 18f are associated with a third RGN (not shown).

Generally, during MBMS configuration of each eNB 18, each eNB 18 can inform the network that it wishes to receive packets addressed to a group, that is, each eNB 18 joins the group. An MBMS multicast IP address identifies the group. The MBMS-GW 42 is able to address packets to the eNBs in the group using the MBMS multicast IP address.

In the embodiment, a group comprises the first and second eNBs 18a, 18b, and for the first service area 30, an IP multicast address is reserved by the network. A group can, but does not necessarily, comprise the eNBs in a particular service area. The BM-SC 44 is configured to map between a MBMS service area identifier and the MBMS multicast IP address identifying that group. In this embodiment, the first and second eNBs 18a, 18b in the first service area are provided with a unique identifier of the RGN, in this case an IP address of the RGN 46 and port identifier (the IP address and port being together referred to as "AP") before an MBMS procedure request is received in order for the first and second eNBs 18a, 18b to be able to provide a response to the RGN 46. Alternatively, an AP of the RGN 46 for the eNB to address a response message is provided in or appended to an MBMS procedure request, or as part of a service announcement preceding an MBMS procedure request. In the embodiment or in the alternative, the unique identifier is an IP address only- provision of a port identifier is not essential.

Optionally, in accordance with the embodiment or with one of the alternatives, each of the first and second eNBs 18a, 18b is, instead of being provided with an AP, provided with a list of RGNs in a priority order. Each of these RGNs 46 has a unique identifier, for example, a unique AP with which that RGN is uniquely addressed to allow other network elements, such as the eNBs 18, to identify it. The eNBs 18 are configured to select an RGN from the list to send a response to in response to an MBMS procedure request. The first and second eNBs 18a, 18b select the RGN 46.

In the embodiment, the RGN 46 is provided with an indication of the number of eNBs that should provide such a response. Optionally, the RGN 46 is also provided with the APs of the eNBs.

In operation, the BM-SC 44 sends an MBMS procedure request to the MBMS-GW 42. The MBMS procedure request includes an MBMS procedure request identifier in the form of an MBMS service area identifier identifying the first service area 30. The MBMS-GW 42 receives the MBMS procedure request from the BM-SC 44, and maps from an MBMS service area identifier to the MBMS multicast IP address of the group. The BM-SC 44 then forwards the MBMS procedure request to the eNBs in that service area via the routers 38, 40. It will be appreciated that the eNBs 18a, 18b are joined to the group identified by this IP multicast address by way of example only. The invention is not limited to signalling to a group comprising eNBs of a particular service area, and in embodiments of the invention the group may exclude particular eNBs or comprise further eNBs outside a single service area.

MBMS procedure request messaging in the E-UTRAN is now described with reference to Figure 4. The BM-SC 44 sends a MBMS procedure request - in this case an MBMS Session Start message - to the MBMS-GW 42. The MBMS procedure request is alternatively used for other MBMS session control messages, for example an MBMS Session Update message or an MBMS Session Stop message and such messages can also contain this identifier. The MBMS procedure messages are as described above with reference to Figure 1 for UTRAN.

The MBMS-GW 42 sends in reply an MBMS Session Start Response to the BM-SC 44. The MBMS-GW 42 also transmits the MBMS Session Start message in a multicast fashion to the first and second eNBs 18a, 18b in the first service area 30, although transmission to the first eNB 18a only is shown in Figure 4. The eNB 18 then establishes a user plane bearer using information in the Session Start message for transfer of data.

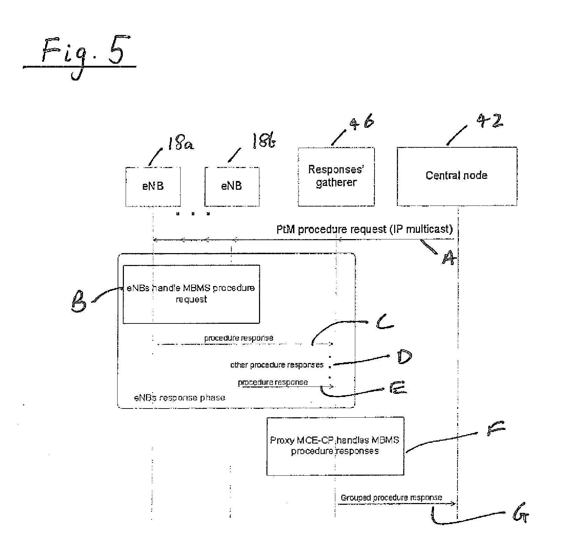

An example of signalling or messaging according to the embodiment implemented in the communications system of Figure 3 will now be described with reference to the signalling diagram of Figure 5. At step A, the central node (that is, the MBMS-GW) 42 sends an MBMS procedure request, for example, a MBMS Session Start, Stop or Update message, via multicast to the single IP multicast address associated with the group comprising all eNBs in the first service area 30, and thus to the first and second eNBs 18a, 18b and any further eNBs in the first service area 30 in the manner described above. The MBMS session message is thus routed by the multicast routers 38, 40 and received by the first and second eNBs 18a, 18b and any further eNBs. The central node 42 also send the MBMS procedure request to the RGN 46.

The central node 42 is configured to expect a response from the RGN 46, rather than from the addressed eNBs 18a, 18b.
The first and second eNBs 18a, 18b process the request at step B to generate a response. The first and second eNBs 18a, 18b then return a response to the RGN 46 at steps C and E respectively. Step D relates to sending of a response by any further eNBs in the group to the RGN 46. In the embodiment, the RGN 46 may send (not shown in Figure 5) a response acknowledgement message to each of the first, second and further , if any, eNBs 18a, 18bfrom which the RGN 46 has received a response, the response acknowledgement message indicating successful reception of the response. However, the response acknowledgement message can additionally indicate successful handling by the RGN 46, or alternatively failed reception and/or handling if appropriate.

At step F, the RGN 46 then processes the responses received from the eNBs 18a, 18b and from any further eNBs and generates a single response message to be sent to the central node 42. An example of the form of the response message, where the MBMS procedure request was sent to twenty-three eNBs, is:

| Counted Number of eNBs | State |
|---|---|
| 16 | Resources are sufficient to allow the service |
| 3 | Resources are insufficient to allow the service |
| 1 | No interest in the service |

(continued)

| Counted Number of eNBs | State |
|---|---|
| 3 | No response |

It will be appreciated that other kinds of indication of state are possible.

The RGN 46 then sends the response message to the central node 42 at step G.

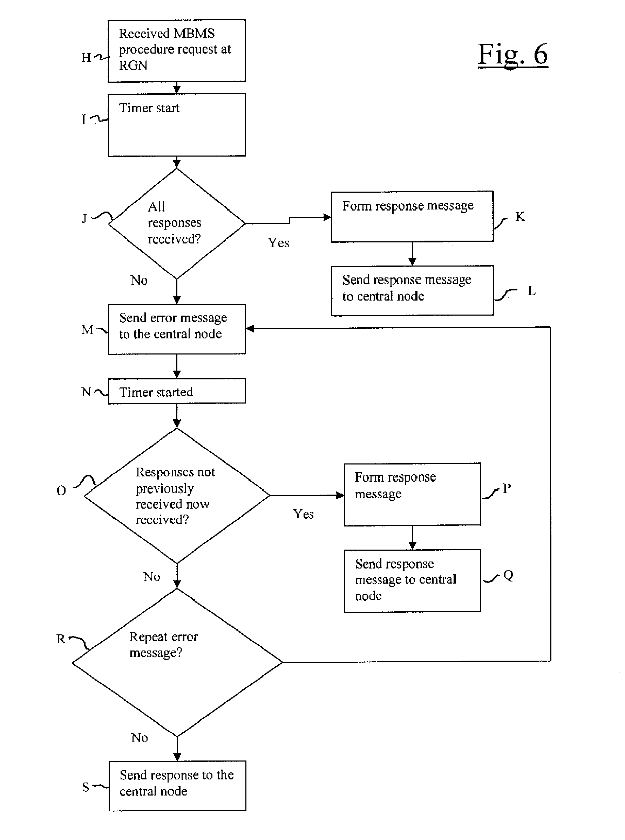

Steps taking place at the RGN 46 are now further described with reference to Figure 6. At step H, the RGN 46 receives an MBMS procedure request from the central node 42. This takes place within step A described above. The RGN 46 is configured to expect a number of responses corresponding to the number of eNBs 18a, 18b that the RGN 46 serves. The RGN 46 is informed of this number in a prior step by the central node 42. The MBMS procedure request is also received by all of the eNBs addressed by the MBMS multicast IP address, in this embodiment, all the eNBs in the first service area 30.

At step I, the RGN 46 starts an internal or external timer (not shown). The timer is configured to expire after a time period T_grcn. Step J takes place on expiry of the time period T_grcn. The RGN 46 then determines whether a response has been received from all the eNBs .

If all the expected responses have been received, the RGN 46 forms a response message to send to the central node 42 at step K in the manner indicated at step F in Figure 5. At step L, the message is sent to the central node 42 in the same way as at step G in Figure 5.

If all expected responses have not been received, the RGN 46 sends a repeat request message to the central node 42 at step M. The repeat request message, which is in this embodiment in the form of an error message, requests that the central node 42 retransmit the MBMS procedure request, and provides an indication why retransmission is required, for example, because responses are missing from three eNBs in accordance with the example above. The central node 42 then retransmits the MBMS procedure request to all of the eNBs. On sending the repeat request message, the RGN 46 resets and restarts the timer, as indicated at step N.

At the end of another time interval T_grcn, the RGN 46 determines at step O whether the expected responses that were not previously received have now been received. If so, the RGN 46 forms (step P) a response message and sends (step Q) the response message to the central node 42 in the same way as described above for steps K and L.

If the RGN 46 determines that the expected responses have not been received at the end of the time period since the number of responses does not correspond with the number of expected responses, the RGN 46 determines at step R whether the transmission of a repeat request message should be sent to the central node 42. Such a determination is based on the number of times that transmission of the MBMS procedure request has already been repeated. If the MBMS procedure request has already been repeated a predetermined number of times, the RGN 46 determines that rather than sending a repeat request message, the RGN 46 should send (step S) a response to the central node 42 including information about the state of each of the eNBs. The state for each eNB 18a, 18b from which no response has been received is that those eNBs are taken to be non-responsive.

In an alternative embodiment, the repeat request message takes the form of the response message. The central node 42 is configured to interpret the response message as a repeat request message if a "no response field" has a non-zero value. However, alternatively, an error message can accompany the response message, or the response message need not be sent at this stage - it can only be sent when responses have been received from all the eNBs, or if the RGN 46 receives an indication that no further transmission of the MBMS procedure request will take place and therefore a response message should be sent comprising available information about state.

The RGN 46 then receives (step not shown) an acknowledgement message from the central node 42 to confirm receipt of the response message by the central node 42.

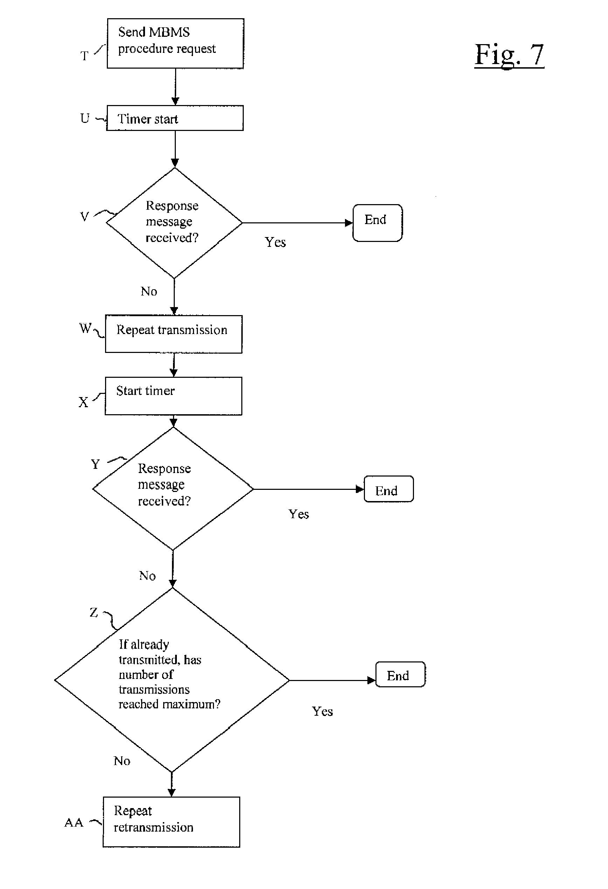

The embodiments preferably extend to sending of the MBMS procedure request message to eNBs in several service area, in the embodiment described to the first, second and third service areas 30, 32, 34, and the associated RGNs. Referring to Figure 7, which shows operations taking place at the central node 42. The central node 42 transmits at step T the MBMS procedure request to the eNBs 18 and to the RGNs 46. The central node 42 then starts an internal or external timer at step U. The timer expires at step V after a time period T_cn, where

$$T\_cn > T\_grcn + T\_a,$$

where T_a is a time period necessary for an MBMS procedure request to pass from the central node 42 to a one RGN of the RGNs 46 which is the farthest of the RGNs 46 from the central node 42, be processed by that RGN, and for that RGN to return a response message or a repeat request message to the central node 42.

The central node 42 then determines whether all expected responses have been received. If so, the MBMS message signalling is at an end. The central node 42, or another network entity to which the central node 42 passes data in the response message, then uses the data.

If the central node 42 determines that it has not received a response message from one or more RGNs 46 within the time period T_cn since the number of received response messages does not correspond to the number of RGNs 46, the central node 42 transmits a first retransmission of the MBMS procedure request to all eNBs 18 and RGNs 46, as indicated at step X. Reasons for non-receipt of a response message are, for example, the MBMS procedure request did not reach some or all of those RGNs 46 or the response messages from some or all of those RGNs 46 are lost. The MBMS procedure request retransmitted is labelled as a first retransmission. The central node 42 then resets and starts the timer. Steps X and Y are performed in a same way as steps U and V.

If not all expected response messages have been received after the first retransmission, the central node 42 determines the number n of retransmissions that have taken place (step Z). If the number n has reached a predetermined maximum number N of retransmissions, the central node 42 ends attempt to transmit the MBMS procedure request in respect of eNBs 18 associated with the RGNs 46 from which no response message has been received. If the number is below the maximum, the central node 42 transmits a further retransmission (step AA). The central node 42 then repeats the steps X and Y. Each retransmission is labelled appropriately as the nth retransmission.

The eNBs 18 receiving a retransmission of the MBMS procedure request each retransmit a response to the RGN 46 serving that eNB 18 if the respective node has not received a response acknowledgment message from the RGN 46. Any eNBs 18 whose state has changed also retransmits a response to the RGN serving that eNB.

Similarly, an RGN 46 receiving a retransmission message retransmits a response message to the central node 42 if that RGN 46 has not received an acknowledgement message from the central node 42. If the state information received by the RGN 46 has changed, because the state of an eNB has changed and that eNB has reported that change to the RGN 46 in response to receipt of a retransmitted MBMS procedure request, then the RGN 46 also transmits an updated response message to the central node 42.

In an alternative embodiment, the central node 42 does not retransmit an MBMS procedure request to all eNBs, but only to RGNs 46 and eNBs 18 associated with RGNs 46 from which no response message has been received. To allow this to take place, each RGN 46 maintains a list of unique identifiers such as APs of eNBs associated with it, and determines from which eNBs no response has been received. The RGN 46 passes the unique identifiers to the central node 42, which retransmits the MBMS procedure request in a connection oriented fashion to those eNBs. Alternatively, the RGN 46 forwards the MBMS procedure request itself to those eNBs for which a response has not been received. A procedure for forwarding the MBMS procedure request is for the RGN 46 to start a timer on receipt of the message procedure request and after a time period T_mb has elapsed, where T_mb < T_grcn, the RGN 46 to transmit to the eNBs 46 in a connection oriented manner. A response from each eNB to which the RGN 46 has transmitted the MBMS procedure request is expected within T_grcn- T_mb.

Similarly, in another alternative embodiment, the central node 42 knows before first transmission of the MBMS procedure request, the APs of the RGNs 46 from which a response message is expected. The response messages in this alternative modification include an indication of a respective RGN's AP. The central node 10 is thus capable of determining from which one or more RGNs 46 no response message has been received, and retransmitting the MBMS procedure request to those RGNs 46 and eNBs 18 associated with those RGNs 46 only.

In a still further alternative embodiment, in response to receipt of a retransmitted MBMS procedure request, each RGN 46 that has already transmitted a response message resends the response message to the central node 42, since the response message previously received may have been lost or gone unprocessed. If an RGN has not sent previously a response message, that RGN now sends a response message to the central node 42. Retransmission is repeated until a response message has been received from all RGNs 46 in a single loop, or until the number of retransmissions reached the maximum allowed. Alternatively, retransmission is repeated until a response message has been received from all RGNs 46 over all loops. In either case, since the central node 42 is able to distinguish the RGNs 46 based on source IP address in a header of the respective response messages, the central node 42 is capable of determining if more than one response message has been received from an RGN 46, and in this case discards response messages received earlier.

In a further alternative embodiment, the RGN 46 is a logical entity, and is embedded in another network element such as an eNB. Such an eNB 18 with embedded RGN 46 functionality then receives responses from the other eNBs 18 with which the RGN logical entity is associated, and provides a single response message to the central node 42.

The eNBs 18 can provide other information in addition to or in place of the information mentioned above. For example, an eNB might provide information about the minimum guaranteed resources, such as quality of service, available for a service in that eNB. In this case, the central node 42 and a node associated with a service provider for provision of whose service the MBMS session messaging is required may re-negotiate parameters for the proposed MBMS bearer for the session to a lower guaranteed bit rate.

Another example of such other information is an estimate of delay transmission value between the central node 42 and an eNB 18. In a synchronisation scheme for MBMS transmissions, it is required that each of the eNBs 18 transmits a response to a message from the central node 42 within a predetermined time window, and at a transmission time defined by a time stamp within the message plus a predetermined time period, or by an air-transmission time that is in turn defined by a generation or transmission time plus the time period. Delays in receipt of the message can arise in the transport network from the central node 42 to one or more of the eNBs 18, and so it is possible that some eNBs receive a packet too late for being transmitted within the target time window. In this case, those eNBs 18 calculate such an estimate and transmit the estimate as feedback to the RGN 46, which is processed and passed to the central node 42. The time period can thereafter be suitably adjusted to compensate for delays in the transport network. The RGN 18 can receive such values from eNBs 18 and determine one or more statistical values for inclusion in the response message to the central node 42. The statistical values can be, for example, means or variation. The central node 42 can use these statistical values to decide on different MBMS bearers for different RGNs for control plane signalling and/or user plane signalling. RGNs can also be grouped dependent on the statistical values and a bearer having particular parameters determined accordingly.

Use of transmission delay values is discussed in European patent application no. 07009244.0 in relation to an IP disturbance port at a central node 16, and control of delay for synchronisation of message broadcast, and is herein incorporated by reference.

In another embodiment, the RGN 46 is also capable of performing a role of representing the RAN in quality of service re-negotiation with the central node 42. This role may be the primary function of the RGN 46. The statistical values and information about guaranteed resources mentioned above can be obtained by the central node 42 in the manner described with reference to Figure 5 to allow the central node 42 to determine if such re-negotiation is useful. If the central node 42 decides to update the quality of service requirements of the MBMS user plane bearer in light of information provided by the RGN 18, the central node 42 sends an MBMS procedure request in the form of an MBMS Session Update..

The central node 42 is preferably capable of determining that eNBs served by different RGNs have different capabilities, and grouping the RGNs into subsets accordingly. The determination of such subsets is preferably based on information about eNBs in a particular service area received following an MBMS procedure request, as described with reference to Figures 5, 6 and 7. The information preferably comprises an indication of resources available at eNBs. If the RGNs are so grouped, the central node 42 then determines and uses different bearers for different groups, respectively, for control plane and/or user plane signalling. Notably, it is not essential for all the eNBs in a service area to be grouped together - they may be otherwise grouped, for example sub-grouped.

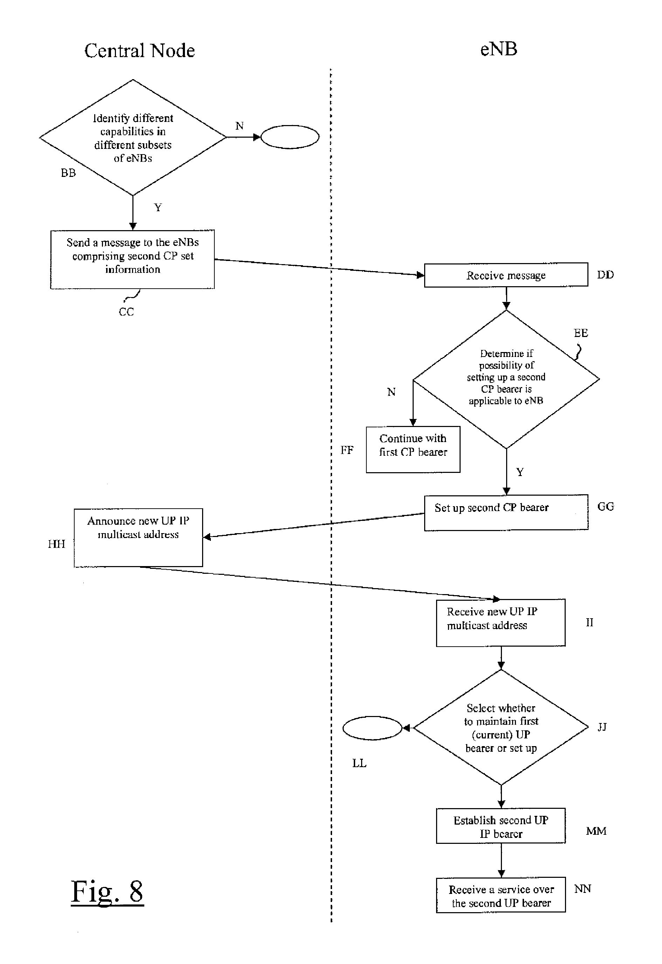

This is explained further with reference to Figure 8. Steps indicated on the left side of Figure 8 take place in a central node and on the right side take place in one of the eNBs. Initially, a first control plane (CP) bearer associated with the first service area 30 and a particular IP multicast address at the central node 42 is in place to allow control plane signalling thereover between a central node 42 and the eNBs 18 in the first service area 30 including the first and second eNBs 18a, 18b. To allow data packet transfer, the eNBs in the first service area 30 have a first user plane (UP) IP multicast address associated therewith.

At step BB the central node 42 decides whether to use a different bearer for a subset of eNBs served by a determined subset of RGNs, and not for RGNs not in that subset, for a same service currently being or to be provided over a first user plane bearer.

The decision is based on information received from the RGNs about the eNBs that each RGN serves at step S. In the embodiment, the subset includes the RGN 46.

If the central node 42 determines that no such different bearer is useful for eNBs served by any RGN, the first CP bearer continues to be used. If so, the central node 42 therefore provides a second CP MBMS bearer, in addition to the first CP bearer, that is associated with a second IP multicast address for all the subset of eNBs associated with the determined subset of eNBs. The central node 42 makes this decision, for example, if eNBs associated with the subset of RGNs have, on average, provided similar responses indicating similar resource availability. Therefore, the central node 42 determines to handle those eNBs as a single group.

If the central node 42 determines that a different bearer for eNBs associated with a subset of RGNs would be useful, the central node 4 sends at step CC an MBMS message in the form of an MBMS Session Update request to eNBs associated with all RGNs, the message comprising set up information for a second control plane bearer.

Each eNB receives the MBMS Session Update request at step DD. First, each eNB determines (step EE) whether the set up information is applicable to that eNB. To achieve this, the MBMS Session Update request including a list of the RGNs 46 in the subset. Each RGN 46 is identified in the list by a unique identifier, for example, an AP. The AP is preferably provided earlier to the central node 42 from the RGN having that AP, in order to allow the central node to generate the list. The AP can be provided in a source address in a response message received by the central node 42 from that RGN or as an additional AP identifier provided as a parameter in a response message. Alternatively, the central node 42 may be otherwise provided with identity information for each of the RGNs 46 with which the central node 42 is in communication, either by means of connection-oriented communications with each of the RGNS or by connection-less communications using, for example, an IP notification port.

If an eNB determines that the RGN with which it is associated is not indicated in the list, it continues with the present MBMS bearer, indicated at step FF. If an eNB determines that the RGN with which it is associated is found in the list, it establishes the second control plane bearer in accordance with the set up information in the MBMS Session Update message, indicated at step GG.

In a modification, each eNB that determines that the RGN with which it is associated is found in the list determines whether to set up the second control plane bearer based on criteria at the respective eNB, for example the capabilities and resources thereat.

At step HH, the central node 42 announces to the subset of eNBs over the second control plane bearer a second user plane IP multicast address.

While the central node has determined a subset of eNBs that will, on average, better receive a service over a second UP bearer, there may be one or more eNBs in the subset whose resources and/or capabilities are such that the service would be better received over the first UP bearer. Therefore, the first UP IP multicast address is preferably kept by the eNBs 18 together with the second UP IP multicast address. Each eNB in the subset 18 then selects (step JJ) one of the first and second UP bearers for user plane signalling. The selection is, for example, based on the resources available at the particular eNB - if the particular eNB has resources available such as to be better suited to one of the first and second user plane bearers allowing greater quality of service, the eNB selects that one bearer. Accordingly, only those eNBs that require lower quality of service receive it by selection of the appropriate one of the first and second user plane bearers; those eNBs better suited to a bearer allowing a higher quality of service can do so. If the eNB determines that its resources are such as to allow it to better receive a service over the second UP bearer than the first UP bearer, the eNB establishes (step MM) the second user plane bearer using the second UP IP multicast address accordingly. UP and CP signalling then take place over the second CP and UP bearers respectively. If the eNB determines that its resources are such as to allow it to better receive a service over the first UP bearer, the eNB maintains the first UP bearer (step LL).

In an alternative embodiment, rather than allow the subset of eNBs to select to establish a second UP bearer, the eNBs are configured to establish the second UP bearer on receipt of the second UP IP multicast address. Alternatively, the second user plane IP multicast address is provided together with a command from the central node to establish the second UP bearer.

In the embodiment, each eNB preferably maintains both first and second CP bearers set up. However, alternatively the unused bearer is dropped.

In a modification, an eNB in the subset whose resources change over time changes the bearer over which it is receiving a service. For example, an eNB receiving a service over the second UP bearer determines that the first UP bearer is better suited to the resources of the eNB, and thus establishes the first UP bearer and continues to receive the service.

The invention is not limited to establishment of a second CP or UP bearer. The central node 42 can determine several subsets of RGNs and associated eNBs on the basis of similar resource indications in a received response message, and determine a different bearer for each subset. Furthermore, in a modification an eNB is not limited to selecting between two UP bearers - the eNB can select the UP bearer most suitable in view of its resources from three or more possible UP bearers.

It will be appreciated that the invention is not limited to implementation in a E-UTRAN network. In particular, implementation is expected to be possible in an LTE network or UTRAN for reducing need for bandwidth and load at the central node in signalling in an MBMS architecture. In such an architecture, NBs would be in place of the eNBs described above, while the signalling could take place in a similar manner. Application of the invention is also not limited to telecommunications systems, but could be applied to packet data communications systems in general.

Optionally, the network may not support connection oriented signalling between the RGN 46 and the central node 42. In this case the central node 42 would include an IP notification port or IP disturbance port at which to receive response messages from the RGNs. This advantageously simplifies implementation of the embodiments since the central node 42 could be configured as a broadcast and/or multicast oriented node without need for the expense of providing support for connection oriented signalling.

As mentioned above, although a number of RGNs are present in the network. The RGNs may be arranged in a hierarchical fashion, that is, so that several RGNs send a response message to another RGN. The other RGN then processes the information received from the several RGNs and forms a single further response message, which the other RGN sends to the central node, or to a yet further RGN higher in the hierarchy, as the case may be.

The embodiments have been described in relation to MBMS session management, but are applicable to MBMS signalling in general.

**Claims**

1.  A method of controlling communication in a communications network, comprising:

    receiving at least one second message, the or each second message being received from a respective one of a plurality of nodes, the or each at least one second message comprising information indicative of a state of the respective node, in response to a first message from a central node;
    forming a third message comprising data associated with said information; and
    sending said third message to the central node.

2.  A method according to claim 1, further comprising, after the step of receiving, determining that at least one second message has not been received and indicating to the central node that at least one second message has not been received.

3.  A method according to any one of the preceding claims, further comprising, before the step of forming, determining that no further second messages are to be received.

4.  A method according to claim 2, further comprising
    determining a unique identifier of the or each of the plurality of nodes from which no second message has been received and
    sending the unique identifier of the or each of the plurality of nodes from which no second message has been received to the central node.

5.  A method according to claim 4, further comprising:

    receiving a first message, the first message being a multimedia broadcast/multicast message; and
    forwarding the multimedia broadcast/multicast message to the or each of the plurality of nodes from which no second message has been received.

6.  A method according to any one of the preceding claims, wherein said information includes at least one of:

    an indication that the respective node has sufficient resources to receive a service;
    an indication that the respective node has insufficient resources to receive a service;
    an indication that a service is not to be provided to the respective node;
    an estimate of time delay for message transmission between the central node and the respective node; and
    an indication of available resources at at the respective node.

7.  A method according to any one of the preceding claims, wherein said data includes at least one of:

    an indicator that at least one of said plurality of nodes has sufficient resources to receive a service;
    an indicator that at least one of said plurality of nodes has insufficient resources to receive a service;
    an indicator that a service is not to be provided to at least one node;
    an indicator that no message was received from at least one node;
    information derived from estimates of time delay for message transmission between the central node and at least one node; and
    an indication of available resources at at least one of said plurality of nodes.

8.  A method according to any one of the preceding claims, further comprising:

    sending from the central node to the plurality of nodes the first message, wherein the first message is a multimedia broadcast/multicast message..

9.  A method according to any one of the preceding claims, further comprising:

    in response to receiving at the central node an indication that at least one second message has not been received, retransmitting the first message to the plurality of nodes.

10. Apparatus for controlling communication in a communications network, arranged to:

receive at least one second message, the or each second message being received from a respective one of a plurality of nodes, the or each at least one second message comprising information indicative of a state of the respective node, in response to a first message from a central node;
form a third message including data associated with said information; and
send said third message to a central node.

11. Apparatus according to claim 10, arranged to carry out a method according to any one of claims 1 to 5.

12. An apparatus according to claim 10 or 11, wherein said apparatus comprises an access node.

13. A method of controlling communication in a communications network, comprising, at a node:

receiving a multimedia broadcast/multicast message from a central node; and
sending a response to said message to a response handling node, said response including information indicative of a state of the node.

14. A method according to claim 13, wherein said message includes at least one of:

an indication that the respective node has sufficient resources to receive a service;
an indication that the respective node has insufficient resources to receive a service;
an indication that a service is not to be provided to the respective node;
an estimate of time delay for message transmission between the central node and the respective node; and
an indication of available resources at at the respective node
a unique identifier of the node.

15. Apparatus arranged to:

receive a multimedia broadcast/multicast message from a central node; and
send a response to said message to a response gathering node, said response including information indicative of a state of the apparatus.

16. An apparatus according to claim 15, wherein said apparatus comprises an access node.

17. A method of controlling communication in a communications network, comprising,
sending a multimedia broadcast/multicast service message to a plurality of nodes; and
receiving a response message, said response message including data indicative of a state of at least some of said plurality of nodes.

18. A method according to claim 17, further comprising:

receiving an indication that at least a number of said plurality of nodes have not responded to the multimedia broadcast/multicast service message; and
retransmitting the multimedia broadcast/multicast service message to the plurality of nodes.

19. Apparatus for controlling communication in a communications network, arranged to:

send a multimedia broadcast/multicast service message to a plurality of nodes; and
receive a response message, said response message including data indicative of a state of at least some of said plurality of nodes.

20. An apparatus according to claim 19, wherein said apparatus comprises a multimedia broadcast/multicast service gateway.

21. A method of controlling communication in a communications network, the communications network comprising at least two sets of nodes, each set comprising at least two nodes, the method comprising:

receiving information indicative of available resources at least two nodes over a first bearer; and
determining whether to enable a second bearer for communication with at least one of the sets based on said information.

**22.** A method according to claim 21, wherein it is determined to enable a second bearer to be established with the nodes in the at least one set, the method further comprising:

transmitting a multimedia broadcast/multicast service message comprising information about a second bearer to the nodes in the at least two sets.

**23.** Apparatus for controlling communication in a communications network, the communications network comprising at least two sets of nodes, each set comprising at least two nodes, the network element being arranged to:

receive information indicative of available resources at least two nodes over a first bearer; and
determine whether to enable a second bearer for communication with at least one of the sets based on said information.

**24.** Apparatus according to claim 23 arranged to carry out the method of any one of claims 21 or 22.

**25.** A method comprising, at a node, comprising:

receiving a message comprising information about a second bearer over a first bearer;
determining whether the node is authorised to establish the second bearer; and if the node is authorised, establishing the second bearer.

**26.** A method according to claim 25, wherein the first bearer is a first user plane bearer and the second bearer is a second user plane bearer, the method further comprising:

receiving over the second control plane bearer information about a user plane bearer.

**27.** A method according to claim 26, wherein the node has available for user plane signalling another user plane bearer, the method further comprising:

selecting one of the user plane bearer and other user plane bearer for user plane signalling based on at least one of:

at least one parameter of the user plane bearer;
at least one parameter of the other user plane bearer;
minimum requirements of a service to be received;
and resources at the node.

**28.** Apparatus arranged to:

receive a message comprising information about a second bearer over a first bearer; and
determine whether the node is authorised to establish the second bearer; and if the node is authorised, establishing the second bearer.

**29.** Apparatus according to claim 28, further arranged to carry out a method according to any one of claims 25 to 27.

**30.** An evolved node comprising apparatus according to claim 28 or claim 29.

# Fig. 1

Fig. 2

eNb 18a | MBMS-GW 42 | BM-SC 44

MBMS Session Start

MBMS Session Start | MBMS Session Start Response

Establishing the user plane for data transfer

## Fig. 4

BM-SC 44

IP multicast router

MBMS signalling message

## Fig. 3

MBMS-GW 42

40

RGN 46

38

36

eNb 18a | eNb 18b | eNb 18c | eNb 18d | eNb 18e | eNb 18f

Service Area 1

Service Area 2

Service Area 3

30

32

34

Fig. 5

18a    18b    46    42

eNB    eNB    Responses' gatherer    Central node

PtM procedure request (IP multicast)

A

B    eNBs handle MBMS procedure request

C    procedure response

D    other procedure responses

E    procedure response

eNBs response phase

F    Proxy MCE-CP handles MBMS procedure responses

G    Grouped procedure response

## Fig. 6

```
H ⌇    Received MBMS
        procedure request at
        RGN

          │
          ▼

I ⌇    Timer start



          │
          ▼

       ╱ All ╲
J ⌇   ╱ responses ╲ ──Yes──▶   Form response message  ⌇ K
       ╲ received? ╱
        ╲      ╱                        │
          │                             ▼
          No
          │                     Send response message  ⌇ L
          │                     to central node
          ▼
M ⌇    Send error message  ◀──────────────────────────┐
        to the central node                           │
          │                                           │
          ▼                                           │
N ⌇    Timer started                                  │
          │                                           │
          ▼                                           │
       ╱ Responses not ╲                              │
O ⌇   ╱ previously ╲ ──Yes──▶  Form response    ⌇ P   │
       ╲ received now ╱         message                │
        ╲ received? ╱                  │               │
          │                            ▼               │
          No                    Send response    ⌇ Q   │
          │                     message to central     │
          ▼                     node                   │
       ╱ Repeat error ╲                                │
R ⌇   ╱ message? ╲ ─────────────────────────────────────┘
       ╲         ╱
          │
          No
          │
          ▼
S ⌇    Send response to the
        central node
```

**Fig. 7**

T — Send MBMS procedure request

U — Timer start

V — Response message received? — Yes → End

No

W — Repeat transmission

X — Start timer

Y — Response message received? — Yes → End

No

Z — If already transmitted, has number of transmissions reached maximum? — Yes → End

No

AA — Repeat retransmission

Central Node                                              eNB

```
        ┌─────────────┐
        │ Identify different │
        │ capabilities in    │──── N ────○
        │ different subsets  │
        │   of eNBs          │
     BB └─────────────┘
             │
             │ Y
             ▼
    ┌──────────────────┐                    ┌──────────────────┐
    │ Send a message to │                   │ Receive message  │  DD
    │ the eNBs          │──────────────────▶│                  │
    │ comprising second │                   └──────────────────┘
    │ CP set information│                             │
    └──────────────────┘                             ▼
           CC                             ┌──────────────────┐  EE
                                          │ Determine if      │
                                          │ possibility of    │
                                    N     │ setting up a second│
                                   ◀──────│ CP bearer is       │
                                   │      │ applicable to eNB  │
                                   ▼      └──────────────────┘
                           ┌──────────────┐        │
                      FF   │ Continue with │       │ Y
                           │ first CP bearer│      ▼
                           └──────────────┘  ┌──────────────────┐  GG
                                             │ Set up second CP │
   ┌──────────────────┐                      │     bearer       │
   │ Announce new UP IP│◀────────────────────└──────────────────┘
   │ multicast address │
HH └──────────────────┘
          │                            ┌──────────────────┐
          └──────────────────────────▶│ Receive new UP IP│  II
                                       │ multicast address │
                                       └──────────────────┘
                                                 │
                                                 ▼
                                       ┌──────────────────┐
                                       │ Select whether   │
                            ○◀─────────│ to maintain first │  JJ
                            │          │ (current) UP      │
                           LL          │ bearer or set up  │
                                       └──────────────────┘
                                                 │
                                                 ▼
                                       ┌──────────────────┐
                                       │ Establish second UP│  MM
                                       │ IP bearer          │
                                       └──────────────────┘
                                                 │
                                                 ▼
                                       ┌──────────────────┐
                                       │ Receive a service │  NN
                                       │ over the second UP │
                                       │ bearer             │
                                       └──────────────────┘
```

# Fig. 8

| | Europäisches Patentamt European Patent Office Office européen des brevets | **EUROPEAN SEARCH REPORT** | Application Number EP 08 15 4222 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/057036 A (ERICSSON TELEFON AB L M [SE]; LOHMAR THORSTEN [DE]; HUNDSCHEIDT FRANK) 24 May 2007 (2007-05-24) * abstract; claims 1,2,7,8,22,23; figures 2-5 * * page 3, line 22 - page 6, line 27 * * page 9, lines 21-38 * * page 11, line 11 - page 17, line 6 * ----- | 1-3,6-20 | INV. H04L12/56 |
| X | WO 2004/040928 A (ERICSSON TELEFON AB L M [SE]; HUNDSCHEIDT FRANK [NL]; LOHMAR THORSTEN) 13 May 2004 (2004-05-13) * abstract; claims 1,11,12; figures 5,6 * * page 10, line 10 - page 11, line 25 * * page 14, line 16 - page 15, line 13 * * page 21, line 19 - page 22, line 10 * * page 23, line 19 - page 24, line 11 * ----- | 1,2,5-20 | |
| X | PANASONIC, NOKIA SIEMENS NETWORKS: "R3-080782 MBMS session start procedure" 3GPP TSG-RAN WG3 MEETING #59BIS, [Online] 26 March 2008 (2008-03-26), XP002496538 Shenzen, China, 31 March - 3 April 2008 Retrieved from the Internet: URL:http://www.3gpp.org/ftp/tsg_ran/WG3_Iu /TSGR3_59bis/docs/> [retrieved on 2008-09-19] * abstract; figure 1 * Sections 2.1-2.3 ----- -/-- | 1,10,13, 15,17,19 | TECHNICAL FIELDS SEARCHED (IPC) H04L H04Q |

~~The present search report has been drawn up for all claims~~

| Place of search | Date of completion of the search | Examiner |
|---|---|---|
| The Hague | 22 September 2008 | Nogueroles Petersen |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 08 15 4222

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA SIEMENS NETWORKS, NOKIA: "R3-080792 On Master Node B+/Legacy RNC Solution for MBMS over Node B+" 3GPP TSG-RAN WG3 MEETING #59BIS, [Online] 4 April 2008 (2008-04-04), XP002496539 Shenzen, China, 31 March - 3 April 2008 Retrieved from the Internet: URL:http://www.3gpp.org/ftp/tsg_ran/WG3_Iu /TSGR3_59bis/docs/> [retrieved on 2008-09-19] Section 2.3) Session Start | 1,10,13, 15,17,19 | |
| X | VODAFONE GROUP: "R3-080406 MBMS Considerations for HSPA Evolution" 3GPP TSG-RAN WG3 MEETING #59, [Online] 18 February 2008 (2008-02-18), XP002496540 Sorrento, Italy, 11-15 February 2008 Retrieved from the Internet: URL:http://www.3gpp.org/ftp/tsg_ran/WG3_Iu /TSGR3_59/docs/> [retrieved on 2008-09-19] Sections 2.1 and 2.3 | 1,10,13, 15,17,19 | |
| X | HOFMANN ET AL: "A taxonomy of feedback for multicast" INTERNET CITATION, [Online] XP002297612 Retrieved from the Internet: URL:http://www.ietf.org/proceedings/99jul/ I-D/draft-hnrs-rmt-avt-feedback 00.txt> [retrieved on 2004-09-13] * abstract * * page 3, lines 20-41,53-58 * * page 4, lines 29-49 * | 1,10 | TECHNICAL FIELDS SEARCHED (IPC) |

-/--

~~The present search report has been drawn up for all claims~~

| Place of search | Date of completion of the search | Examiner |
|---|---|---|
| The Hague | 22 September 2008 | Nogueroles Petersen |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

.....................................................................................

& : member of the same patent family, corresponding
 document

EPO FORM 1503 03.82 (P04C01)

| | Europäisches<br>Patentamt<br>European<br>Patent Office<br>Office européen<br>des brevets | **EUROPEAN SEARCH REPORT** | Application Number<br>EP 08 15 4222 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | NOKIA SIEMENS NETWORKS, NOKIA: "R3-071017<br>LTE MBMS Control Plane aspects"<br>3GPP TSG-RAN3 #56, [Online]<br>3 May 2007 (2007-05-03), XP002496541<br>Kobe, Japan, 7-11 May 2007<br>Retrieved from the Internet:<br>URL:http://www.3gpp.org/ftp/tsg_ran/WG3_Iu<br>/TSGR3_56/docs/> [retrieved on 2008-09-19]<br>* the whole document *<br>----- | 1-20 | |
| A | NOKIA SIEMENS NETWORKS, NOKIA: "R3-071566<br>E-MBMS Architecture and Session<br>Management"<br>3GPP TSG-RAN3 #57, [Online]<br>15 August 2007 (2007-08-15), XP002496542<br>Athens, Greece, 20-24 August 2007<br>Retrieved from the Internet:<br>URL:http://www.3gpp.org/ftp/tsg_ran/WG3_Iu<br>/TSGR3_57/docs/> [retrieved on 2008-09-19]<br>* the whole document *<br>----- | 1-20 | |
| | | | TECHNICAL FIELDS<br>SEARCHED (IPC) |

~~The present search report has been drawn up for all claims~~

| Place of search | Date of completion of the search | Examiner |
|---|---|---|
| The Hague | 22 September 2008 | Nogueroles Petersen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................
& : member of the same patent family, corresponding
document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-20

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 15 4222

The Search Division considers that the present European patentapplication does not comply with the requirements of unity of invention and relates to severalinventions or groups of inventions, namely:

    1. claims: 1-20

        Methods and corresponding apparatuses for controlling
        communication in a communications network comprising sending
        from a central node a first message to several nodes, these
        nodes send a feedback message regarding their corresponding
        state to a response handling node that forms a third message
        aggregating the feedback and sends it to the central node.
        ---

    2. claims: 21-30

        Methods and corresponding apparatuses for controlling
        communication in a communications network wherein
        information about resources at a set of at least two nodes
        is received over a first bearer, and dependent on this it is
        determined if a second bearer is enabled for communication
        if the node is authorised to establish the second bearer.
        ---

**ANNEX TO THE EUROPEAN SEARCH REPORT
ON EUROPEAN PATENT APPLICATION NO.**                    EP 08 15 4222

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2008

| Patent document cited in search report | | Publication date | Patent family member(s) | | Publication date |
|---|---|---|---|---|---|
| WO 2007057036 | A | 24-05-2007 | EP | 1958390 A1 | 20-08-2008 |
| WO 2004040928 | A | 13-05-2004 | AT | 319271 T | 15-03-2006 |
| | | | AU | 2003274028 A1 | 25-05-2004 |
| | | | BR | 0315504 A | 23-08-2005 |
| | | | CN | 1709003 A | 14-12-2005 |
| | | | DE | 60303806 T2 | 19-10-2006 |
| | | | EP | 1557061 A1 | 27-07-2005 |
| | | | ES | 2260651 T3 | 01-11-2006 |
| | | | KR | 20050057682 A | 16-06-2005 |
| | | | US | 2006069799 A1 | 30-03-2006 |
| | | | ZA | 200502002 A | 31-05-2006 |

EPO FORM P0459

For more details about this annex : see Official Journal of the European Patent Office, No. 12/82

**EP 2 109 263 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 07009244 A